# EUROPEAN PATENT APPLICATION

(11) **EP 1 564 896 A1**
(43) Date of publication of application: **17.08.2005**
(21) Application number: 04002878.9
(22) Date of filing: 10.02.2004
(51) Int. Cl.: H04B 1/04

(54) **Impedance matching for an antenna**

(71) Applicant: Sony Ericsson Mobile Communications AB, 221 88 Lund (SE)
(72) Inventor: Glatz, Andreas, 240 12 Torna Hällestad (SE)
(74) Representative: Lindberg, Olle Nils Olof

(57) **Abstract**

Radio communication terminal and a method for adaptively controlling RF power of such a radio communication terminal comprising an antenna connected to a RF power amplifier (101), comprising the steps of:
- detecting a forward RF signal (P_{F}) to and a reverse RF signal (P_{R}) from the antenna;
- detecting a phase between said forward and reverse RF signals;
- establishing a Voltage Standing Wave Ratio, VSWR, for the antenna;
- assessing a load impedance (Z_{L}) from the established VSWR and detected phase, and
- adaptively controlling the RF power dependent on the assessed load.

Preferably, the step of adaptively controlling comprises the step of adjusting the impedance (Z_{C}) between the power amplifier and the antenna.

## Description

### Field of the invention

The present invention relates generally to antennas for radio communication terminals and, in particular, to methods and arrangements for adaptively matching an antenna load, for power consumption management purposes.

### Background

The cellular telephone industry has had an enormous development in the world in the past decades. From the initial analog systems, such as those defined by the standards AMPS (Advanced Mobile Phone System) and NMT (Nordic Mobile Telephone), the development has during recent years been almost exclusively focused on standards for digital solutions for cellular radio network systems, such as D-AMPS (e.g., as specified in EIA/TIA-IS-54-B and IS-136) and GSM (Global System for Mobile Communications). Currently, the cellular technology is entering the so called 3^{rd} generation, providing several advantages over the former, 2^{nd} generation, digital systems referred to above.

Many of the advances made in mobile phone technology are related to functional features, such as better displays, more efficient and longer lasting batteries, built-in cameras, and so on. However, a common parameter for most of the development in the field is related to miniaturisation. The smaller each component can become, the more functions may be implemented. In order to reduce the size of the portable radio terminals, built-in antennas have been implemented over the last couple of years. The general desire today is to have an antenna, which is not visible to the customer. Today different kinds of patches are used, with or without parasitic elements, and a most common type of built-in antennas currently in use in mobile phones is the so called planar inverted-F antenna (PIFA).

The overall aim to keep the size of the mobile phone down affects the battery too, and in order to be able to combine a small and lightweight battery with long battery time, it is of the highest importance to control power consumption. This is a target that has and will have high priority for all mobile phone manufacturers, in order to stay competitive on the market.

One aspect of controlling power consumption is related to the energy used for radio signal transmission. Standard RF (Radio Frequency) equipment is designed to be used in a 50 Ω environment, and therefore a typical mobile phone antenna is matched to be just close to 50 Ω. However, when the phone is in use, the impedance of the antenna also varies a lot, predominantly due to capacitive coupling with its surroundings and particularly depending on how the user is holding the phone.

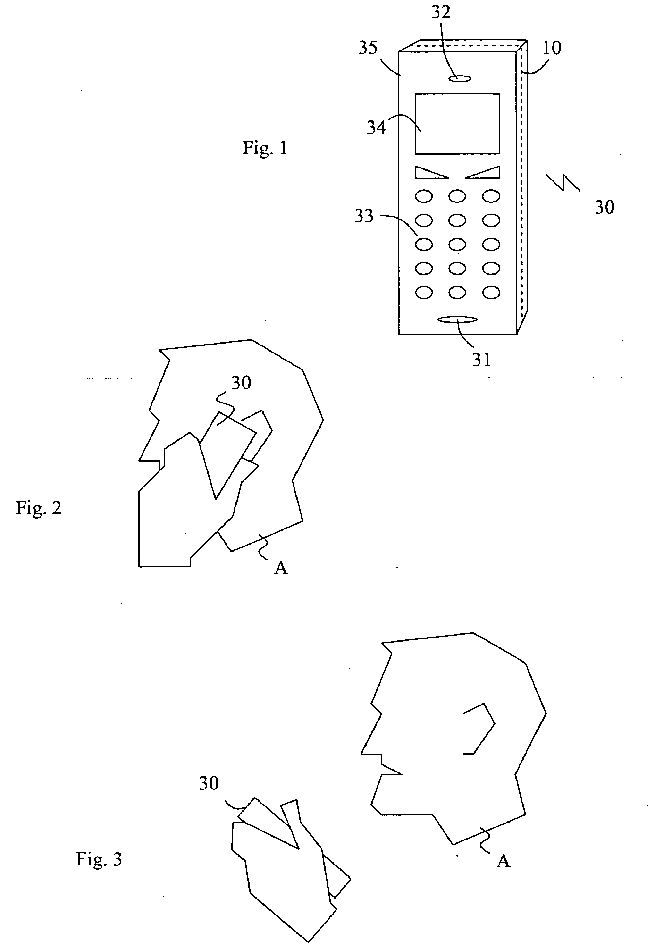

Fig. 2 illustrates a user A speaking in a mobile phone or terminal 30, which the user holds in his hand. The drawing of Fig. 2 illustrates the traditional way of communicating by phone, called talk position, holding a speaker arranged at the upper part of the terminal to the ear, with the microphone arranged at the lower part of the terminal adjacent to the mouth. For a built-in antenna, the hand will to at least some extent cover the antenna, and the load of the antenna will also be affected by how the terminal is held.

Fig. 3 illustrates another way of holding the terminal while communicating, where user A holds the terminal in front of him. Speech communication is still possible by means of the speaker and microphone of the terminal, or by use of a communicatively connected headset (not shown). This way of using the terminal has become more and more common, due to the development of wire-connected or cordless portable hands free device, the implementation of cameras in the terminals, and advanced displays means with video communication capabilities. In this particular drawing, the user still holds the terminal in his hand, but may of course also place the terminal on a table or the like.

As mentioned, the antenna of the terminal is designed to be close to 50 Ω in a typical user case, such as that illustrated in Fig. 2. Furthermore, both the transmit and receive paths of the terminal are also matched as close as possible to an imaginary 50 Ω source/load. In other words, the terminal is designed to work, or would at least work best, with a fixed 50 Ω load, but due to how the terminal is used the actual load varies. When a mismatch occurs, i.e. when actual load is not 50 Ω, energy will be lost in e.g. heat, thereby rendering a power loss in the RF signal.

Today, this problem is handled by monitoring the actual power, and controlling it such that sufficient signal power is achieved. Three different methods for controlling the power from a power amplifier PA in the transmit link are used today, and all of these assume that the load is at least close to 50 Ω. A first solution makes use of a directional coupler and a diode detector which senses the peak voltage of the RF signal coming out from the PA. A second solution makes use of a low ohm resistor, typically 0.05 Ω, on the feed line of the PA, and a voltage drop over the resistor is used as a measure of the output power. A third solution is more modem approach, where the voltage on the collector of the PA output transistor is controlled.

### Summary of the invention

Hence, it is an object of the present invention to overcome the above-identified problem related to the prior art, and more specifically to provide a solution for managing power consumption related to a mismatch between radio terminal matching and actual antenna source/load variations.

According to a first aspect, this object is fulfilled by a method for adaptively controlling RF power of a radio communication terminal comprising an antenna connected to a RF power amplifier, comprising the steps of:
- detecting a forward RF signal to and a reverse RF signal from the antenna;
- detecting a phase between said forward and reverse RF signals;
- establishing a Voltage Standing Wave Ratio, VSWR, for the antenna;
- assessing a load impedance from the established VSWR and detected phase, and
- adaptively controlling the RF power dependent on the assessed load.

In one embodiment, the step of adaptively controlling comprises the step of adjusting the impedance between the power amplifier and the antenna.

Advantageously, the step of adjusting the impedance comprises the step of selectively connecting said power amplifier to at least one of a number of impedance elements in the terminal.

Preferably, the step of selectively connecting comprises the step of using a Micro Electro-Mechanical Systems, MEMS, switch for connecting said at least one impedance element to the power amplifier. Alternatively, the step of selectively connecting comprises the step of using an electronic switch for connecting said at least one impedance element to the power amplifier.

In one embodiment, said at least one impedance element is serially connected between an output of said power amplifier and said antenna.

In another embodiment, said at least one impedance element connects an output of said power amplifier to ground, between the power amplifier and said antenna.

According to a second aspect, the objects stated above are fulfilled by a radio communication terminal, comprising an antenna, an RF power amplifier connected to said antenna, and means for controlling RF signal power, wherein said means comprises RF signal detecting means connected to said power amplifier for detecting a forward RF signal and a reverse RF signal, a phase detector for detecting a phase between said forward and reverse RF signals, processing means for establishing a Voltage Standing Wave Ratio, VSWR, for the antenna and for assessing a load impedance from the established VSWR and detected phase, and means for adaptively controlling the RF power dependent on the assessed load.

In one embodiment, said means for adaptively controlling comprises means for adjusting the impedance between the power amplifier and the antenna.

Preferably, said means for adjusting the impedance comprises a number of impedance elements, and a switch mechanism for selectively connecting said power amplifier to at least one of said number of impedance elements.

Advantageously, said switch mechanism comprises the step a Micro Electro-Mechanical Systems, MEMS, switch for connecting said at least one impedance element to the power amplifier. Alternatively, said switch mechanism comprises an electronic switch for connecting said at least one impedance element to the power amplifier

In one embodiment said switch mechanism is devised to selectively connect or disconnect said at least one impedance element serially between an output of said power amplifier and said antenna.

Preferably, said switch mechanism is devised to selectively connect any of said number of said number of impedance elements parallel to each other, serially between an output of said power amplifier and said antenna.

In another embodiment, said switch mechanism is devised to selectively connect or disconnect said at least one impedance element between an output of said power amplifier and ground.

In one embodiment, said RF signal detecting means comprises a directional coupler.

### Brief description of the drawings

The features and advantages of the present invention will be more apparent from the following description of the preferred embodiments with reference to the accompanying drawings, on which
Fig. 1 schematically illustrates an exemplary radio communication terminal in which the present invention may be employed;
Fig. 2 schematically illustrates a radio communication terminal held by a user in talk position;
Fig. 3 schematically illustrates a radio communication terminal held by a user in front of him;
Fig. 4 schematically illustrates a circuit according to an embodiment of the invention, for adaptively controlling RF power matched to a sensed load;
Fig. 5 schematically illustrates an impedance matching mechanism according to one embodiment of the invention;
Fig. 6 schematically illustrates an impedance matching mechanism according to another embodiment of the invention; and
Fig. 7 schematically illustrates an impedance matching mechanism according to yet another embodiment of the invention, combining the features of Figs 5 and 6.

### Detailed description of preferred embodiments

The present description refers to a radio communication terminal as a device in which to implement an adaptive RF power-controlling means and method according to the present invention. The term radio communication terminal includes all mobile equipment devised for radio communication with a radio station, which radio station also may be mobile terminal or e.g. a stationary base station. Consequently, the term radio terminal includes mobile telephones, pagers, communicators, electronic organisers, smartphones, PDA:s (Personal Digital Assistants), vehicle-mounted radio communication devices, or the like, as well as portable laptop computers devised for wireless communication in e.g. a WLAN (Wireless Local Area Network). Furthermore, since the invention as such is suitable for but not restricted to mobile use, the term radio communication terminal should also be understood as to include any stationary device arranged for radio communication, such as e.g. desktop computers, printers, fax machines and so on, devised to operate with radio communication with each other or some other radio station. Furthermore, it should be emphasised that the term comprising or comprises, when used in this description and in the appended claims to indicate included features, elements or steps, is in no way to be interpreted as excluding the presence of other features elements or steps than those expressly stated.

Fig. 1 illustrates a radio communication terminal in the embodiment of a cellular mobile phone 30. The terminal 30 comprises a chassis or housing 35, carrying a user audio input in the form of a microphone 31 and a user audio output in the form of a loudspeaker 32 or a connector to an ear piece (not shown). A set of keys, buttons or the like constitutes a data input interface 33 is usable e.g. for dialling, according to the established art. A data output interface comprising a display 34 is further included, devised to display communication information, address list etc in a manner well known to the skilled person. The radio communication terminal 30 includes radio transmission and reception electronics (not shown), and is devised with a built-in antenna device inside the housing 35, which antenna device is indicated in the drawing by the dashed line as an essentially flat object. It should be noted, though, that the present invention is in no way restricted to built-in antennas, and may equally be employed for e.g. traditional projecting antennas.

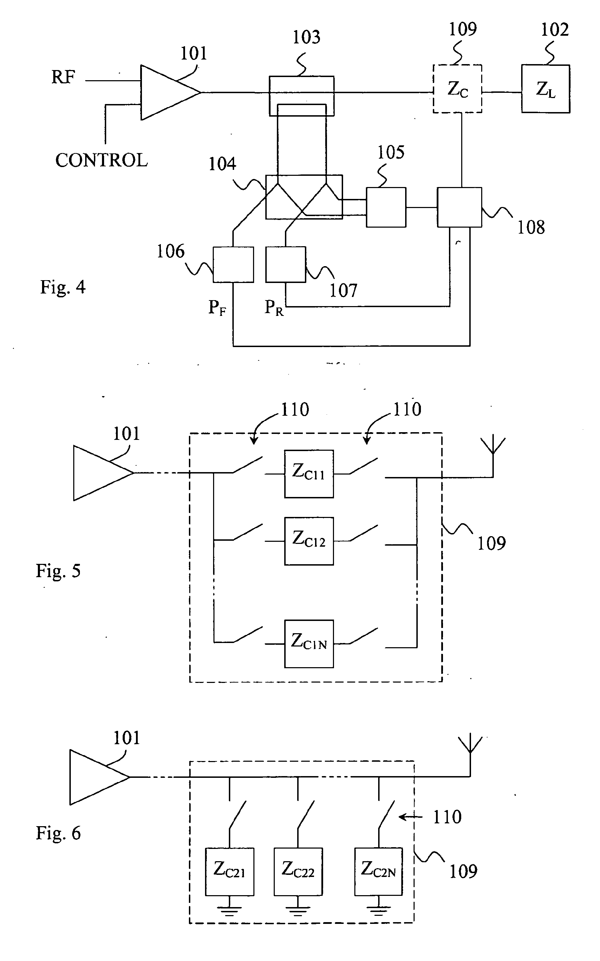

Fig. 4 illustrates a transmit path of a circuit for a radio communication terminal according to an embodiment of the invention, including a power amplifier 101 with an input for a radio frequency signal RF, and a control input. An output from power amplifier 101 is connected to an antenna of the terminal. The antenna is represented here by the load Z_{L} 102. As stated before, the actual value of load Z_{L} 102 varies dependent on how the terminal is used, and as a result the power fluctuates. The present invention proposes a solution for controlling the power to the load by establishing a measurement of the actual impedance of load Z_{L} 102. A directional coupler 103 is connected to the signal line between power amplifier 101 and load 102. Directional coupler 103 used for separating and separately detecting forward signal power from the power amplifier 101, and reverse reflected signal power from the antenna.

Directional coupler 103 is in turn connected to power detectors 106 and 107, for measuring the forward signal power P_{F} and the reverse signal power P_{R}. In a preferred embodiment, diode detectors are used for this purpose. The established values of P_{F} and P_{R} are relayed to processing means 108, preferably a microprocessor with associated software and memory means. Processing means 108 are devised to calculate a ratio between peak voltages for the detected forward and reverse signals to establish a Voltage Standing Wave Ratio VSWR of the actual load impedance, i.e. the antenna of the terminal as presently used. The means and process steps for VSWR calculation are a well known part of the state of the art, and are not described in any further detail here.

A phase detector 105 is further coupled to directional coupler 103, and is devised to detect the phase between the detected forward and reverse signals. Once the VSWR and the phase are known, the actual load impedance may be calculated in a manner well known to the skilled person. Phase detector 105 is therefore coupled to processing means 108, and processing means 108 comprises means for executing this calculation for assessing a calculated value of the actual load impedance Z_{L}. Preferably a splitter 104 or a buffer solution is used to connect directional coupler 103 both to phase detector 105 and detectors 106, 107.

According to the invention, the assessed value of Z_{L} is used for adaptively controlling the RF power of the terminal. In one embodiment, this may be achieved by adjusting the control input to power amplifier 101 to give correct power to the actual load. In another embodiment, the adaptive control is achieved by selectively switching in matching elements between power amplifier 101 and the antenna.

Fig. 5 illustrates impedance matching means 109, in an embodiment having a number of parallel matching elements Z_{C11}-Z_{C1N}. A switching mechanism 110 is devised to switch in one or more matching elements between power amplifier 101 and the antenna. The impedance of each matching element may be equal, the total impedance Z_{C} being determined by the number of switched in elements. In a preferred embodiment, though, the matching elements have different impedance values. Still, one or more matching elements may be switched in to obtain a certain overall impedance Z_{C}. Furthermore, one of said matching elements may be zero. However, a nominal situation is preferably a certain impedance represented by one of elements Z_{C11} to Z_{C1N}, such that the overall impedance Z_{C} may be both increased and decreased from the nominal value.

Fig. 6 illustrates an alternative embodiment of impedance matching means 109 with a number of matching elements Z_{C21}-Z_{C2N} connected parallel to each other to ground. A switching mechanism 110 is devised to switch in one or more matching elements between the power amplifier 101 output and ground. As before, the impedance of each matching element may have equal or different values.

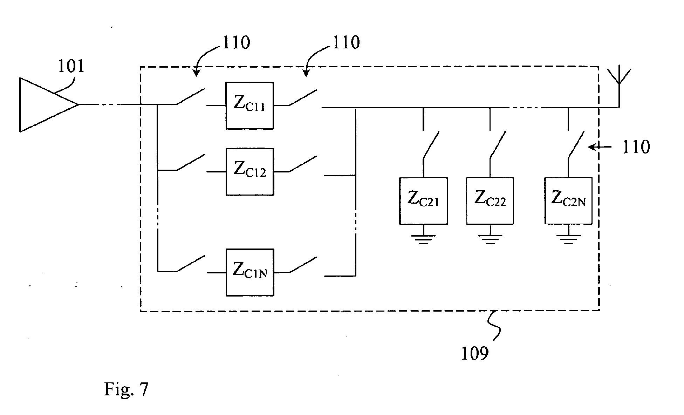

Fig. 7 illustrates yet another embodiment of impedance matching means 109, in which a combination of the techniques of the embodiments in Figs 5 and 6 is employed. In other words, Fig. 7 relates to an embodiment in which both serial impedance matching elements Z_{C11} to Z_{C1N} and parallel impedance matching elements Z_{C21}-Z_{C2N} are separately switched in to adjust the overall impedance Z_{C}.

In a preferred embodiment, switching mechanism 110 comprises Micro Electro-Mechanical Systems, MEMS, switches. An advantage with a MEMS switch is that they have very good RF behaviour. An alternative solution is to use an electronic switch, such as a Field Effect Transistors, FET, or other switching devices.

It should be noted that the drawings of Figs 5 and 6 only show the transmit path of a radio communication terminal, but that the invention is equally applicable to the receive path.

Returning to Fig. 4, impedance matching means 109 are illustrated positioned between power amplifier 101 and the antenna load Z_{L}. As stated earlier, the RF circuitry of the terminal is matched to a predetermined impedance, typically 50 Ω. When Z_{L} is different from that predetermined impedance, a mismatch occurs. According to the present invention, and in particular the preferred embodiment of Fig. 4, this is mismatch is overcome by assessing the actual load Z_{L}, and then compensating the mismatch by setting the impedance of Z_{C} such that the total load of Z_{L}+Z_{C} equals the predetermined load. In particular, Z_{C} is selected such that any imaginary, i.e. capacitive or inductive, parts of the total load are eliminated, resulting in a purely resistive load as experienced by power amplifier 101.

A technical effect of the invention is that the terminal will always have a correctly matched antenna to its RF circuits (not shown). As a consequence thereof, the total RF performance will be significantly improved compared to the prior art. For instance, a mobile phone implementing the invention will have increased capabilities for keeping a call connected when it otherwise would drop the call due to low signal strength. Furthermore, load mismatch is a problem for terminal manufacturers and users, since it causes power losses. A mismatched terminal may consume 2-3 W, with a major part being lost in heat, whereas a perfectly matched terminal devised in accordance with the present invention may consume only about 0.5 W. This implies great power savings, which may be used for other purposes in the terminal, or for miniaturising the terminal battery.

The foregoing has described the principles, preferred embodiments and modes of operation of the present invention. However, the invention should be regarded as illustrative rather than restrictive, and not as being limited to the particular embodiments discussed above. It should therefore be appreciated that variations may be made in those embodiments by workers skilled in the art without departing from the scope of the present invention as defined by the following claims.

## Claims

1. Method for adaptively controlling RF power of a radio communication terminal comprising an antenna connected to a RF power amplifier (101), comprising the steps of:
- detecting a forward RF signal (P_{F}) to and a reverse RF signal (P_{R}) from the antenna;
- detecting a phase between said forward and reverse RF signals;
- establishing a Voltage Standing Wave Ratio, VSWR, for the antenna;
- assessing a load impedance (Z_{L}) from the established VSWR and detected phase, and
- adaptively controlling the RF power dependent on the assessed load.

2. The method as recited in claim 1, wherein the step of adaptively controlling comprises the step of adjusting the impedance (Z_{C}) between the power amplifier and the antenna.

3. The method as recited in claim 2, wherein the step of adjusting the impedance comprises the step of selectively connecting said power amplifier to at least one of a number of impedance elements (Z_{C11}-Z_{C1N}; Z_{C21}-Z_{C2N}) in the terminal.

4. The method as recited in claim 3, wherein the step of selectively connecting comprises the step of using a Micro Electro-Mechanical Systems, MEMS, switch (110) for connecting said at least one impedance element to the power amplifier.

5. The method as recited in claim 3, wherein the step of selectively connecting comprises the step of using an electronic switch for connecting said at least one impedance element to the power amplifier.

6. The method as recited in any of the preceding claims 3-5, wherein said at least one impedance element is serially connected between an output of said power amplifier and said antenna.

7. The method as recited in any of the preceding claims 3-6, wherein said at least one impedance element connects an output of said power amplifier to ground, between the power amplifier and said antenna.

8. Radio communication terminal, comprising an antenna, an RF power amplifier ( 101 ) connected to said antenna, and means for controlling RF signal power, **characterised in that** said means comprises RF signal detecting means (103,106,107) connected to said power amplifier for detecting a forward RF signal and a reverse RF signal, a phase detector (105) for detecting a phase between said forward and reverse RF signals, processing means (108) for establishing a Voltage Standing Wave Ratio, VSWR, for the antenna and for assessing a load impedance (Z_{L}) from the established VSWR and detected phase, and means for adaptively controlling the RF power dependent on the assessed load.

9. The radio communication terminal as recited in claim 8, **characterised in that** said means for adaptively controlling comprises means (Z_{C}) for adjusting the impedance between the power amplifier and the antenna.

10. The radio communication terminal as recited in claim 9, **characterised in that** said means for adjusting the impedance comprises a number of impedance elements (Z_{C1}-Z_{CN}), and a switch mechanism (110) for selectively connecting said power amplifier to at least one of said number of impedance elements.

11. The radio communication terminal as recited in claim 10, **characterised in that** said switch mechanism comprises the step a Micro Electro-Mechanical Systems, MEMS, switch for connecting said at least one impedance element to the power amplifier.

12. The radio communication terminal as recited in claim 10, **characterised in that** said switch mechanism comprises an electronic switch for connecting said at least one impedance element to the power amplifier.

13. The radio communication terminal as recited in any of the preceding claims 10-12, **characterised in that** said switch mechanism is devised to selectively connect or disconnect said at least one impedance element serially between an output of said power amplifier and said antenna.

14. The radio communication terminal as recited in claim 13, **characterised in that** said switch mechanism is devised to selectively connect any of said number of said number of impedance elements parallel to each other, serially between an output of said power amplifier and said antenna.

15. The radio communication terminal as recited in any of the preceding claims 10-14, **characterised in that** said switch mechanism is devised to selectively connect or disconnect said at least one impedance element between an output of said power amplifier and ground.

16. The radio communication terminal as recited in any of the previous claims 8-15, **characterised in that** said RF signal detecting means comprises a directional coupler (103).
